# EUROPEAN PATENT APPLICATION

(11) **EP 1 883 135 A1**
(43) Date of publication of application: **30.01.2008**
(21) Application number: 06425543.3
(22) Date of filing: 28.07.2006
(51) Int. Cl.: H01R 13/533, H01R 13/658, H01R 13/506, H01R 13/646, H01M 8/04

(54) **Electrical connector**

(71) Applicant: Tyco Electronics AMP Italia S.p.A., 10093 Collegno, TO (IT); Tyco Electronics AMP GmbH, 64625 Bensheim (DE)
(72) Inventor: Sardi, Mario, 10156 Torino (IT); Plazio, Adriano, 10145 Torino (IT); Amerio, Fulvio, 10138 Torino (IT); Eckel, Markus, 68642 Bürstadt (DE); Bahr, Markus, 71404 Korb (DE); Woller, Josef, 64347 Griesheim (DE); Maier, Wolfgang, 64546 Moerfelden-Walldorf (DE)
(74) Representative: Beck, Josef

(57) **Abstract**

High-current angled electrical connector for an electrical cable (2), for transmitting high electrical output to or from a receptacle for the electrical connector (1), particularly in a vehicle, comprising a divided housing (100) having a housing body (110) and a housing cover (140) which is attachable to the housing body (110), wherein a plug-in area (111) of the housing body (110), which may be connected with the connector receptacle, is angled with respect to a cable area (141) of the housing cover (140), at which the cable (2) is securable.

## Description

The present invention relates to an electrical connector for an electrical cable, in particular to an angled electrical connector, for transmitting high voltages and high-currents to or from a receptacle for the electrical connector, particularly in a motor vehicle.

For the purposes of the present patent application, an electrical connector is an electrical component which is intended on the one hand to be firmly or permanently connected to an electrical cable and on the other hand to form a preferably detachable plug-and-socket connection with a mating component. Here, the mating component of the electrical connector is designated connector receptacle. The electrical connector is preferably a separate component, which serves solely to connect the cable with the connector receptacle. The connector receptacle may be incorporated into a housing of any desired apparatus. This may alternatively also be the case for the electrical connector.

In engineering and in particular in electrical engineering, a large number of electrical connectors and connector receptacles of many different types are known. These serve to transmit electrical power and/or electrical signals with the widest possible range of voltages, currents, frequencies and data rates. Furthermore, electrical connector and connector receptacle fulfill other functions. For damp, dusty or chemically aggressive environments, electrical connectors and connector receptacles comprise sealing elements which prevent penetration of the surrounding media into the electrical connector and connector receptacle and corrosion thereof or the formation of conductive deposits therein. Securing elements such as screw threads or latches ensure a secure plug-and-socket connection, even if the plug-and-socket connection is exposed to mechanical tension or vibrations.

Due to the extremely wide range of applications and conditions of use, a wide variety of optimized electrical connectors are to be found. A relatively new field of use for electrical connectors is the transmission of drive power in an electrically driven motor vehicle. This drive power has to be transmitted between an energy storage means, for example a storage battery or a fuel cell, and a power converter, for example a two- or four-quadrant chopper and between the latter and the drive motor(s) in one or in both directions alternately. Between the energy storage means and the power converter, the electrical power is transmitted substantially in the form of direct current. Between the power converter and the drive motors, the electrical power is transmitted for example in the form of a three-phase alternating current. Conversion in the power converter occurs preferably by means of pulse-width modulation. The AC-voltage and the alternating current component, in particular on transmission of power between the power converter and the motors, lead to the emission of electromagnetic interference signals which disturb other electrical and electronic systems inside and outside the vehicle. The emission of interference signals is prevented by providing the conductors via which the electrical power is transmitted with an electromagnetic shielding. This ensures a so-called electromagnetic compatibility (EMC).

Motor vehicles with an electromotive drive existed until now only in the form of prototypes or short run models. For this reason the electrical connectors which have been used in the power transmission area are those which are readily available but are distinguished for the most part by a robust but also very complex structure. These connectors are therefore complex and expensive to produce and fit. With electrically driven motor vehicles moving into the realms of series and mass production, the demands placed on the electrical connectors in the power transmission area are also changing. They not only have to be robust and ensure long-term, malfunction-free functioning over the entire life of the motor vehicle but also have to be simple and cheap to produce and fit. Furthermore, the available space in a vehicle for such a high-current electrical connector is often limited so that electrical connectors have to be small in size.

It is an object of the present invention to provide an electrical connector and an electrical connector arrangement which require little space and are simply in construction and robust in their later application. It is a further object of the present invention to provide an electrical connector and an electrical connector arrangement which are safe with regard to an accumulation of a surrounding media in the electrical connector and the electrical connector arrangement.

This object of the invention is achieved by an electrical connector according to claim 1 and by an electrical connector arrangement according to claim 14. Preferred embodiments of the present invention are defined in dependent claims.

The object of the present invention is solved by a high-current angled electrical connector for an electrical cable wherein the angled electrical connector comprises a housing composed of two parts, a so-called housing body and a so-called housing cover. Hereby the housing body may mainly accommodate and secure an inner conductor element and an electromagnetic shielding attached to the electrical cable, and the housing cover may mainly accommodate and secure the electrical cable itself.

Within an assembled housing (housing cover is attached to or slipped on or (at least) partially inserted into housing body) a tip portion of a packaged electrical cable (inner conductor element is electrically connected with an inner conductor of the electrical cable and an electromagnetic shielding for the tip portion of the electrical cable and the attached inner conductor element is electrically connected with a shielding conductor of the electrical cable) is angled, wherein either the inner conductor element or the electrical cable itself is bent (angled). In the case of the former, the cable itself may not be angled, whereas in the case of the latter, the inner conductor element may not be angled.

The present invention provides the advantage of a small high-current electrical connector for a vehicle due to its angled configuration. According to the invention, it is possible to electrically connect a hybrid or fuel cell application to the electrical part of a motor of a vehicle, wherein it is possible to transmit voltages up to 500V and currents up to 160A.

According to the invention, an angle of 90° between the tip portion of the prepared electrical cable and a mid-portion of the electrical cable is preferred. The invention is not limited to an angle of 90°, any other angle larger than 0° and smaller than 180° is feasible. Preferred angles ranges from 45° to 90°. This applies also to a configuration of the housing body and the housing cover, wherein a plug-in area of the housing body is angled with the above mentioned angles to a cable area of the housing cover.

According to the invention, the inner conductor element (at least partially) and an end portion of the electrical cable are surrounded by an electromagnetic shielding for ensuring EMC. According to the invention, this electromagnetic shielding for the electrical cable is preferably divided up into two parts and provides an electromagnetic shielding from the shielding conductor of the electrical cable near to a leading end of the inner conductor element of the electrical cable. Hereby, one electromagnetic shielding for one cable is preferably made only of two parts. It is also possible to divide up the electromagnetic shielding into more than two parts. Due to the division of the electromagnetic shielding into two parts, it is possible to shield an angled tip portion of the electrical cable.

In a mounted state of the inner conductor element with its surrounding electromagnetic shielding in an assembled housing of the electrical connector, the angled electrical connector according to the invention provides a continuous electrical shielding between the shielding conductor of the electrical cable via the electromagnetic shielding to a shield of the electrical connector, which is accommodated in the plug-in area of the connector and may be contacted by a shield element of a receptacle for the electrical connector. Hereby, the shield element of the receptacle electrically contacts the shield of the electrical connector, so that a complete electromagnetic shielding is provided between the electrical cable and an electrical connection inside the connector receptacle.

For assembling the housing of the electrical connector, the housing cover may preferably be attached at or fully or partially inserted into the housing body. Corresponding locking elements retain then the housing cover at the housing body.

The housing cover comprises a laterally upper opening for inserting an inner conductor element with its encompassed electromagnetic shielding and the tip portion of the electrical cable, whereby the area of the opening is inclined in relation to a plug-in or an inserting direction of the housing cover to the housing body. Due to the inclined opening of the housing cover, it is possible to easily put the inner conductor element and the electromagnetic shielding into the housing cover before its assembly with the housing body. For positioning the inner conductor element(s) and the electromagnetic shielding(s), the housing cover comprises a seat designed for alignment of the inner conductor element(s) and the electromagnetic shielding(s).

For avoiding problems of incorrect alignment of the electromagnetic shielding and the electrical cable and/or the inner conductor element, it is preferred to insert a seat in between for guiding the cable and/or the inner conductor element within the electromagnetic shielding. Hereby, a seat is preferably attached around the angled portion of the electrical cable or the inner conductor element, and is preferably also composed of two parts. In a preferred embodiment of the invention, the two members of the seat are composed of suitable plastics.

To enable fitting of the electrical connector and the inner conductor element/electromagnetic shielding, the housing body of the electrical connector comprises an insulator sleeve and a support sleeve, which are arranged inside one another and are connected together at a front end of the electrical connector with respect to its plug-in direction. The support sleeve is connected to the housing body in an area set back in the plug-in direction and surrounds the insulator sleeve. Thus, the electrical connector comprises a continuous channel surrounded by the insulator sleeve in the manner of a jacket, into which channel the inner conductor element connected to the electrical cable may be inserted into the electrical connector from the rear end thereof in the plug-in direction. The inner conductor element is then accessible from a front end in the plug-in direction for electrical contacting by the connector receptacle. Between the insulator sleeve and the support sleeve there is located a preferably at least approximately jacket-like cavity, which is open towards the rear end of the electrical connector with respect to the plug-in direction, such that the electromagnetic shielding connected to the electrical cable may be introduced from there into said cavity. The support sleeve is surrounded by a plug-in cavity, which is open towards the front end of the electrical connector with respect to the plug-in direction. When the electrical connector is connected to the connector receptacle, the plug-in cavity accommodates the shield element of the connector receptacle.

Preferably, a shield is arranged in the plug-in cavity, which advantageously substantially completely surrounds the support sleeve. At least one first spring contact is provided at the shield or at the electromagnetic shielding for the purpose of projecting into openings in the support sleeve and providing an electrically conductive connection between the shield and the electromagnetic shielding. One or more second spring contacts are provided on the shield for the purpose of contacting the shield element of the connector receptacle when the electrical connector is connected thereto. Alternatively, the connector does not comprise any shield, but rather merely one or more openings in the support sleeve. One or more contact elements attached to the electromagnetic shielding, in particular constructed integral therewith, pass through these openings in order to contact the shield element of the connector receptacle when the connector is connected thereto. This may also be realized by the shield element of the connector receptacle.

The present invention is additionally based on the idea of providing a plurality of shieldings in the case of an electrical connector for a plurality of electrical cables each with an inner conductor and a shielding conductor, wherein each shield separately produces an electrically conductive connection between the shielding of in each case one of the cables and one of a plurality of shield elements of a connector receptacle, when the electrical connector is connected with the connector receptacle. The above-described structure of an electrical connector according to the invention is particularly suitable for such an electrical connector with a plurality of separate shields for a corresponding plurality of shielded cables.

Further advantages of the present invention are that it considerably simplifies and reduces the price of construction and fitting of the electrical connector, and at the same time provides the electrical connector with excellent mechanical and electrical properties.

The housing body is advantageously of integral construction with the support sleeve and the insulator sleeve. Fitting is greatly simplified in that first of all an inner conductor element is connected with the inner conductor of the cable and an electromagnetic shielding with the outer conductor of the cable, for example by crimp connections. The prepared cable is then simply put into the housing cover which in turn is attached at or inserted in the housing body, wherein latch connections preferably fix on the one hand the inner conductor element in the housing body and on the other hand the housing cover at/in the housing body.

Preferably, the electrical connector according to the invention additionally comprises a securing element which locks the inner conductor element with the electrical connector inside the insulator sleeve. This securing element is constructed such that it can only adopt its intended position when the inner conductor element is held together with the electrical connector as intended by a latch connection.

In addition, the securing element preferably assumes a coding function, in that a different configuration solely of the securing element allows the electrical connector to be conformed to a selected one of a plurality of different connector receptacles. This option is particularly advantageous if it is to be ensured that plug-and-socket connections are not mixed up. This is the case, for example, when an identical electrical connector is to be used at a number of positions in a motor vehicle due to similar electrical and mechanical requirements but each electrical connector should match only one of a number of connector receptacles. The connector receptacles are differently configured and each electrical connector is conformed to one of the connector receptacles by selecting one of several different securing elements. Since, apart from the securing element, the other components are identical for all the electrical connectors, these components may be produced in large numbers and thus economically. In particular, mold conversion kits for the various coding configurations have to be introduced only into the smaller, relatively simple mold for producing the securing element.

In addition to use for electrical transmission of drive power in vehicles, the present invention is also suitable for other applications in motor vehicles or in other fields of use.

Preferred exemplary embodiments of the present invention are explained in more detail below with reference to the attached drawing in which
- fig. 1: shows a complete exploded three-dimensional view of a high-current angled electrical connector according to the invention;
- fig. 2: a partially exploded three-dimensional view of the angled electrical connector according to the invention;
- fig. 3: a two-dimensional front view of a mounted angled electrical connector according to the invention;
- fig. 4: a two-dimensional sectional view from top of the angled electrical connector according to the invention; and
- fig. 5: a two-dimensional sectional side-view of the angled electrical connector according to the invention.

It is to be noted that the attached drawing is not schematic. The drawing shows solely one scaled embodiment of the invention.

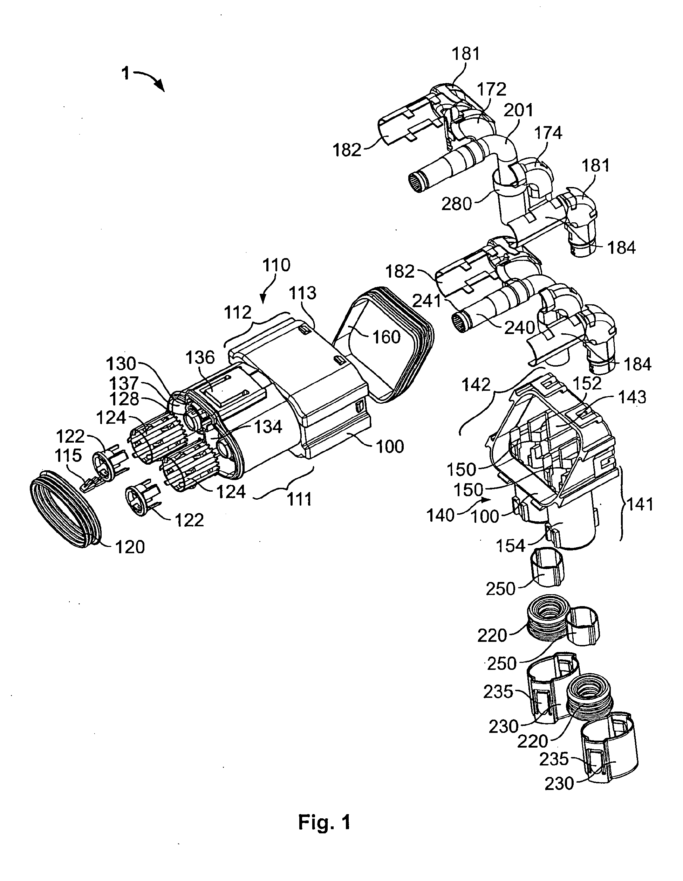

Fig. 1 is a exploded representation of a high-current angled electrical connector 1 according to the invention. The electrical connector 1 comprises a housing 100 separated into two parts, a housing body 110 and a housing cover 140.

The housing body 110 exhibits with an oval cross-section a plug-in area 111 arranged at a front with respect to a plug-in direction of the electrical connector 1. In a cable area 112 arranged at a rear with respect to the plug-in direction of the electrical connector 1, the housing body 110 comprises a receptacle or a block for the housing cover 140. At least on one side of the housing body 110 a latch 136 is provided preferably at the plug-in area 111, which is designed for a latching connection with a corresponding member on a connector receptacle; this may be realized the other way around, as well.

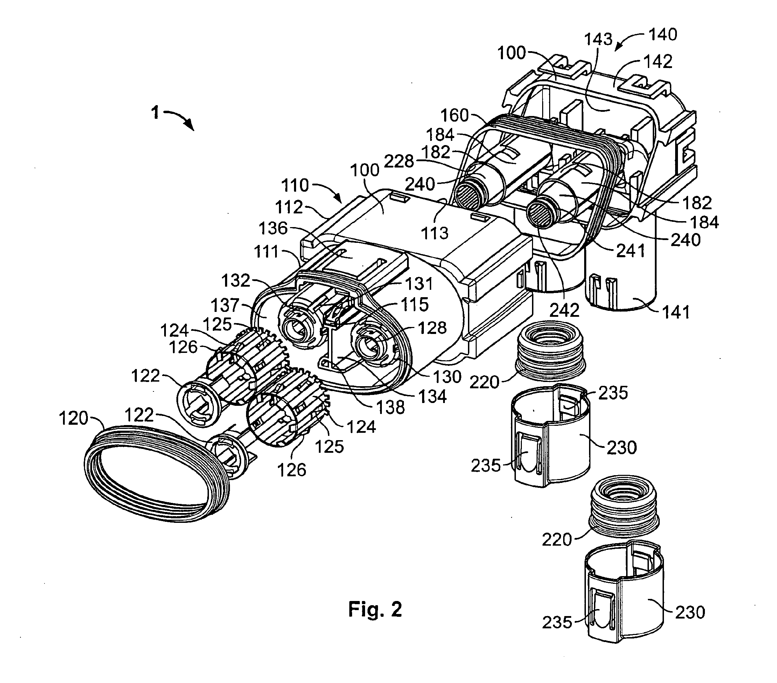

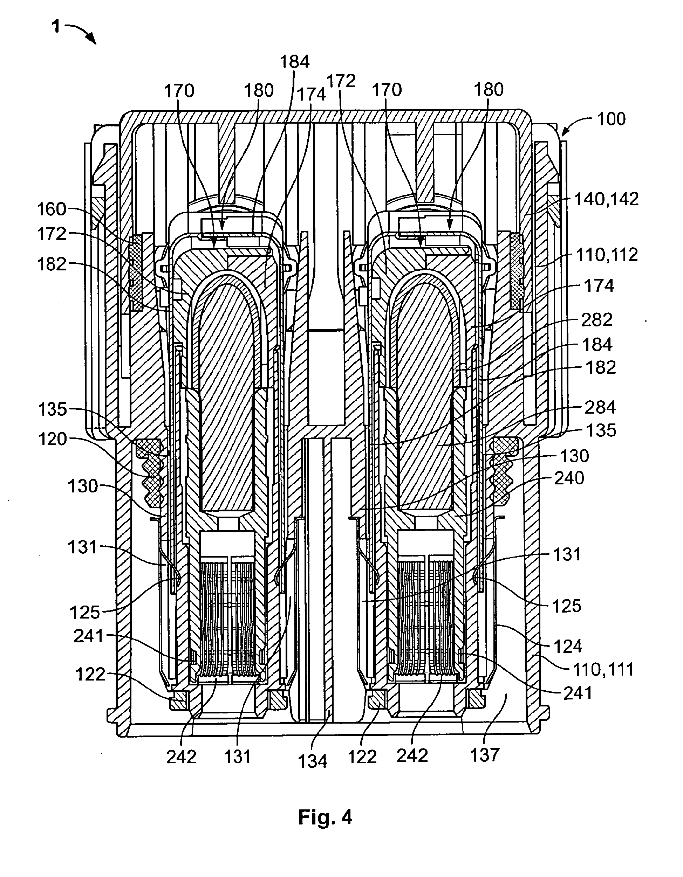

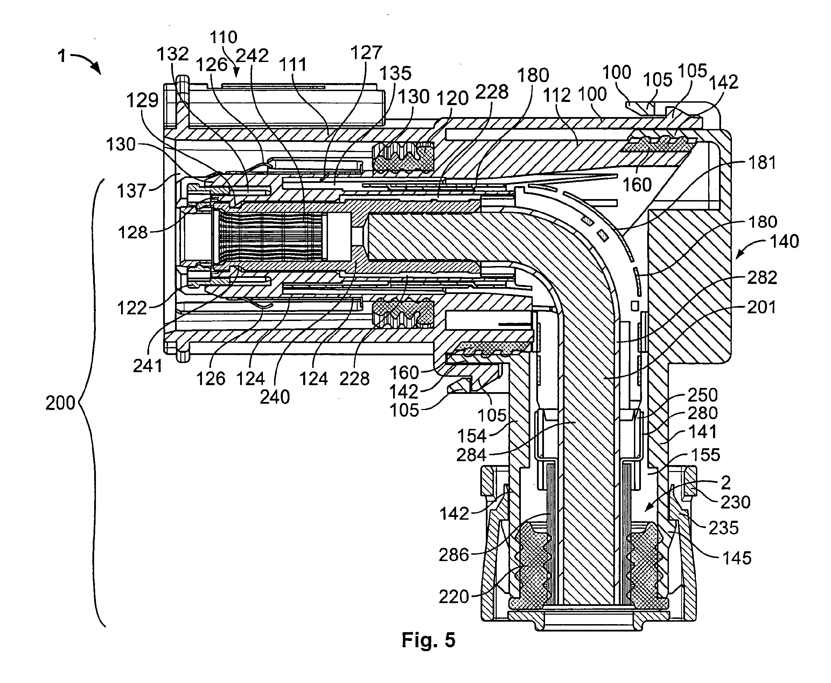

Inside the housing body 110 two insulator sleeves 128 and two support sleeves 130 are arranged. One of the insulator sleeves 128 and one of the support sleeves 130 are in each case arranged coaxially to one another and connected to one another at a front end visible in fig. 2, such that in each case a jacket-like cavity 135 (see fig. 4 and 5) arises between the insulator sleeve 128 and the support sleeve 130. The support sleeves 130 are surrounded in the plug-in area 111 by a plug-in cavity 137. A bar 134 is arranged in the plug-in cavity 137 between the two support sleeves 130.

Shields 124 are introduced into the plug-in cavity 137 on each support sleeve 130. Each of the shields 124 consists of a substantially tubular sheet metal element with outwardly directed second spring contacts 126 distributed evenly around its circumference preferably in the vicinity of its front edge, these being provided to contact shield elements of the connector receptacle when the electrical connector 1 is connected with the connector receptacle. Each shield 124 additionally comprises a plurality of inwardly directed first spring contacts 125 distributed evenly over its circumference, the function of which is described below. At least one spring member 127 or a protrusion 127 in/at the shields 124 are provided for holding the latter in place on the support sleeves 130.

A connector seal 120 is provided for insertion into the plug-in cavity 137 behind (see fig. 5) the shields 124 and to protect the inside of the electrical connector 1 and the connector receptacle from environmental influences when the electrical connector and the connector receptacle are connected together.

Two shielded electrical cables 2 (see fig. 4 and 5) are provided for accommodation into the housing 100 of the electrical connector 1. A cable seal 220 and a cap 230 are drawn over each of the electrical cables 2. An inner conductor element 240 is crimped or otherwise electrically connected to an inner conductor 284 of each of the electrical cables 2. Each of the inner conductor elements 240 has an opening at its front end, which is provided to accommodate and electrically contact a contact pin of the connector receptacle when the electrical connector 1 is connected to the connector receptacle. For a better electrical contact between contact pins of the connector receptacle and the inner conductor elements 240, the latter preferably each comprise a spring sleeve 242 inside at a front end. It is also possible that the inner conductor elements 240 are formed as pin contacts at their front portion, while the mating electrical contacts in the connector receptacle are socking contacts.

An electromagnetic shielding 180 is connected to an exposed portion of a shielding conductor 280 of each of the electrical cables 2 (see fig. 1 and 5). The inner conductor elements 240/electrical cables 2 and the electromagnetic shielding 180 are arranged coaxially to one another. When they together with the housing cover 140 are introduced into the housing body 110, the insulator sleeve 128 will be accommodated in a jacket-like cavity 228 between the inner conductor element 240 and the electromagnetic shielding 180.

At the front end, each of the inner conductor elements 240 comprises a groove 241 in its outer circumference, in which a locking member 129 (fig. 5) engages when the inner conductor element 240 has been fully plugged into the housing body 110 of the electrical connector 1. This connection between the inner conductor element 240 and the housing body 110 is preferably locked together in each case by a securing element 122 (fig. 1 and 2). The securing elements 122 catch in turn in the electrical connector 1 or in a recess 132. The recess 132 is arranged between the insulator sleeve 128 and the support sleeve 130 in a front end of the plug-in area 111.

Specifically fig. 4 and 5 make it particularly clear how the insulator sleeve 128 is arranged between the inner conductor element 240 and the electromagnetic shielding 180. It can also be seen how the support sleeve 130 is arranged between the electromagnetic shielding 180 and the shield 124. The first spring contacts 125 of the shield 124 project through openings 131 in the support sleeve 130 and contact the electromagnetic shielding 180.

Further, fig. 5 shows that cable seals 220 are held by caps 230 in a cable area 141 of the housing cover 140 in spaces between the cable area 141 and the electrical cables 2. Furthermore, the cap 230 is held in place by a catch connection between two mutually opposing locking elements 235 and corresponding locking elements 145 at the housing cover 140. In addition, the shielding conductor 280 of the electrical cable 2 turned out, and up or down and squashed between a crimping sleeve 250 and the electromagnetic shielding 180. It can additionally be seen how the spring member/protrusion 127 of the shield 124 engages in a corresponding opening in the support sleeve 130 in order to hold the shield 124 on the support sleeve 130. The second spring contacts 126 may produce an electrically conductive connection between the shield 124 of the electrical connector 1 and the shield element of the connector receptacle. The locking members 129 engage in the groove 241 in the inner conductor element 240. The securing element 122 locks this catch connection by filling the recess 132 between the locking members 129 and the support sleeve 130, so preventing deflection of the locking members 129, which could result in release of the connection.

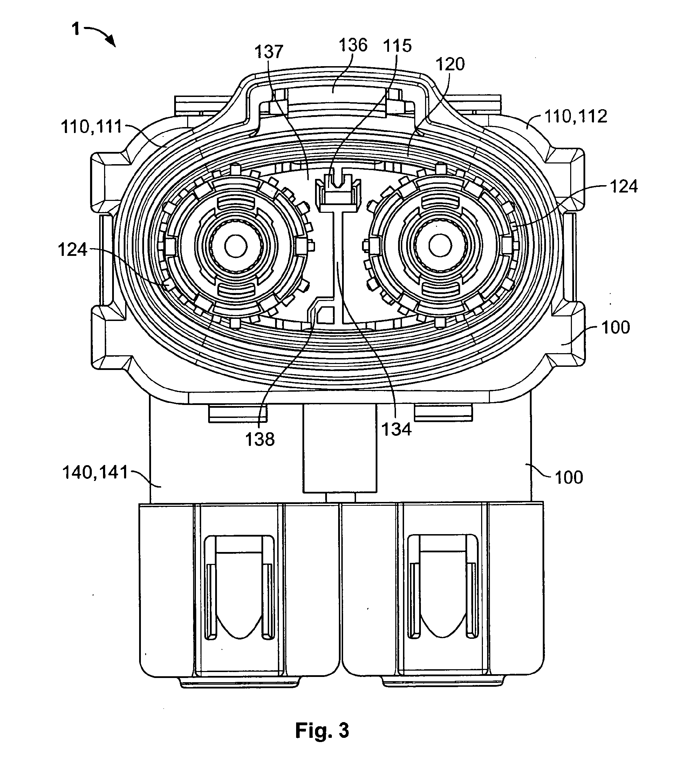

Fig. 1 to 3 show a resilient signal contact 115 mounted in the electrical connector 1, which short-circuits upper ends of short-circuit contacts of the connector receptacle when the electrical connector 1 is connected with the connector receptacle. Furthermore, fig. 2 and 3 show at the bar 134 opposite the signal contact 115 a coding 138 for the receptacle of the electrical connector 1. This coding 138 is optional and may also be provided by the security elements 122.

In particular, a coding function is achieved solely by shaping the securing elements 122. Hereby, it is ensured that a given one of the electrical connectors 1 should match only to a given one of the connector receptacles. The housing body 110 does not have to be conformed thereto, but at least only one securing element 122. This means in practice that the parts 110, 140 of the housing 100 may be produced in large numbers and may be used for more than one of the connector receptacles. The substantially less complex securing element 122 may be easily produced in different shapes and in smaller numbers. Then, on fitting the electrical connector 1 depending on whether the electrical connector 1 is provided e. g. for an electrical cable 2 between an energy source and a power converter or for an electrical cable 2 between a power converter and a drive motor, a corresponding one of the securing elements 122 is selected from the plurality of different securing elements 122 which exclusively match the connector receptacle to be connected with the electrical connector 1.

As mentioned above, the housing 100 of the electrical connector 1 is divided up into two parts, the housing body 110 and the housing cover 140, so that an angled electrical connector 1 may be obtained. Hereby, a longitudinal extension of the housing cover 140 is angled with respect to a longitudinal extension of the housing body 110. Preferably, this angle is about 90°, but any other angle may be appropriate. According to the invention - as can be best seen in fig. 1 and 2 - the housing cover 140 may be attached at or preferably partially inserted into the housing body 110. Furthermore, it is possible to insert the housing body 110 into the housing cover.

In a pre-assembled state of the electrical connector 1, the prepared electrical cable 2 (provided with the inner conductor element 240 and the electromagnetic shielding 180) is put into the housing cover 140 (see fig. 2), wherein the prepared electrical cable 2 is accommodated in a receptacle 150 of the housing cover 140. Hereby, the electromagnetic shielding 180 of the electrical cable 2 rests on a seat 152 of the receptacle 150, wherein each electrical cable 2 extends through a tube 154 attached at the lower side of the housing cover 140. Hereby, the tubes 154 form a cable area 141 of the housing cover 140. The tube 154 is hollow and comprises a throughhole 155 through which the electrical cable 2 extends. After attaching the prepared angled tip portion 200 of the electrical cable 2 in the housing cover 140, the housing cover 140 may be inserted into the housing body 110. Hereby, a housing seal 160 (see also fig. 4 and 5) is provided between the housing body 110 and the housing cover 140. The housing seal 160 is adapted to the form of an inclined opening 143 (see below) of the housing cover 140, i. e. a frame-like seal is displaced at two opposite sides in parallel. In the mounted state of the housing cover 140 in or at the housing body 110, corresponding locking elements 105 keep the housing cover 140 at the housing body 110. Preferably, six of these corresponding locking elements, two on the top side, two on the bottom side and one on both lateral sides, are arranged. Hereby the corresponding locking elements 105 at the housing cover 140 are preferably latches and at the housing body 110 are preferably hooks. This may also be designed vice versa.

For easily mounting the prepared electrical cable 2, the opening 143 of the housing cover 140 from which the tip portions of the electrical cables 2 protrude, is inclined with respect to an inserting direction (plane) of the housing cover 140 into the housing body 110. By means of the receptacle 150 with its seat 152 and the inclined opening 143 of the housing cover 140, the tip portion 200 of the electrical cable 2 is on the one hand easily insertable into the housing cover 140 and is on the other hand easily accessible by the housing body 110. Hereby, an upper edge of the inclined opening 143 lies in projection direction of the through-holes 155 of the tubes 154 in a rear area of these through-holes 155 (rear means an opposite direction of the plug-in direction of the electrical connector 1 into the connector receptacle).

In order to realize an angled electrical connector 1, the tip portion 200 of the prepared electrical cable 2 is bent. In a first embodiment of the invention (shown in the drawing), the electrical cable 2 itself comprises an angled section 201. In a second embodiment of the invention (not shown), the inner conductor element 240 attached to the inner conductor 284 of the electrical cable 2 is bent, wherein a receiving portion of the inner conductor 284 in the inner conductor element 240 is angled with respect to a plug-in portion of the inner conductor element 240, into which the contact pin (or onto which a socket plug) of the connector receptacle may be inserted.

In the following, only the first embodiment of the present invention is further explained. The second embodiment of the invention functions analogously. As can best be seen from fig. 4 and 5, the inner conductor 284 of the electrical cable 2 is mounted in a rear portion of an inner conductor element 240, which is preferably carried out by crimping. An electrical insulation 282 of the electrical cable 2 adjoins at the rear of the inner conductor element 240. After that, the electrical cable 2 is bent about 90° and adjacent at it the shielding conductor 280 of the electrical cable 2 rests on a crimping sleeve 250. Adjoining thereto a cable sheeting 286 is arranged, covering the (outer) shielding conductor 280 of the electrical cable 2.

Almost the complete length of the inner conductor element 240 (except for a small tip portion therefrom), the bent portion of the electrical cable 2 and the crimping sleeve 250 with its shielding conductor 280 is electromagnetically shielded by the electromagnetic shielding 180. Hereby, the electromagnetic shielding 180 comprises a first member 182 and a second member 184. It is also possible to design the electromagnetic shielding 180 from more than two parts. Each member 182, 184 of the electromagnetic shielding 180 is designed as a half-shell which may be crimped together. Hereby, crimping of the electromagnetic shielding 180 takes place in a portion covering the inner conductor element 240 and/or in an angled section 181 of the electrical cable 2 and/or at a tip portion of the electromagnetic shielding 180 lying opposite to the inner conductor element 240, which tip portion fastens the shielding conductor 280 of the electrical cable 2 to the crimping sleeve 250.

For guiding and supporting the electrical cable 2 or the inner conductor element 240 (second embodiment of the invention) between the electromagnetic shielding 180 and the electrical cable 2, a seat 170, preferably a plastic seat 170, is arranged. This seat 170 is comprised of a first 172 and a second member 174 which may be combined to the seat 170. Hereby, the seat 170 extends mainly in the bent portion of the electrical cable 2 (or in the bent portion of the inner conductor element, second embodiment of the invention). Furthermore, during crimping the first 182 and the second member 184 of the electromagnetic shielding 180, the seat 170 supports the first 182 and the second member 184.

In the following the assembly of a high-current angled electrical connector 1 according to the invention for an electrical cable 2 is described.

In a first step, the caps 230 and the cable seals 220 are put onto the electrical cable 2 and the inner conductor elements 240 are connected with the laid open and, if applicable, rightly cut inner conductors 284 of all the electrical cables 2 provided for fitting to the electrical connector 1. The mechanically and electrically connection between the inner conductor elements 240 and the inner conductors 284 is preferably performed by crimping.

In a second step, the parts 172, 174 of the seat 170 are put into the parts 182, 184 of the electromagnetic shielding 180 or are put around the electrical cable 2 or the inner conductor element 240 (second embodiment of the invention), respectively. Further the parts 182, 184 of the electromagnetic shielding 180 are connected with the exposed shielding conductor 280 of each of the electrical cables 2. This is also preferably performed by crimping the two parts 182, 184 together.

In a third step the thus prepared (step one and two) electrical cables 2 are put through the inclined opening 143 into the housing cover 140, wherein the angled tip portions 201 are disposed on the seats 152 of the receptacles 150 for the prepared electrical cables 2.

In a fourth step the pre-mounted housing cover 140 is advanced to/into the housing body 110, wherein the insulator sleeves 128 are each thread between the regarding inner conductor elements 240 and electromagnetic shieldings 180 (cavity 228). During advancing the housing cover 140 to/into the housing body 110 the electrical cables 2 are inserted with their attached inner conductor elements 240 and their electromagnetic shieldings 180 in the housing body 110, whereby the inner conductor elements 240 and the electromagnetic shieldings 180 are established in the electrical connector 1. Concurrently of taking the predestinated place of the inner conductor elements 240 and the electromagnetic shieldings 180 in the housing body 110, the corresponding locking elements 105 engages into each other.

In an optional fifth step, securing elements 122 are selected from a plurality of different ones, in order to match the electrical connector 1 to the connector receptacle selected from a plurality of different ones. This step may also be before step four.

In a sixth step, the securing elements 122 are connected to the electrical connector 1, wherein at the same time the inner conductor elements 240 are locked in the electrical connector 1.

In the second step of connecting the electromagnetic shielding 180 with the exposed shielding conductor 288 preferably comprises the following steps. First of all, the diameter of the shielding conductor 288 of the electrical cable 2 is determined. Depending on this diameter, the internal or external crimping sleeve 250 (fig. 1) with a suitable diameter is selected. The two members 182, 184 of the electromagnetic shielding 180 and the selected crimping sleeve 250 are then used for crimping, wherein the exposed shielding conductor 288 of the electrical cable 2 is fixed with the crimping sleeve 250 and the electromagnetic shielding 180. This procedure has the advantage that the same electromagnetic shielding 180 may be used for electrical cables 2 with different diameters.

## Claims

1. High-current angled electrical connector for an electrical cable (2), for transmitting high electrical output to or from a receptacle for the electrical connector (1), particularly in a vehicle, comprising
a divided housing (100) having a housing body (110) and a housing cover (140) which is attachable to the housing body (110), wherein
a plug-in area (111) of the housing body (110), which may be connected with the connector receptacle, is angled with respect to a cable area (141) of the housing cover (140), at which the cable (2) is securable.

2. Angled electrical connector according to claim 1, wherein the plug-in area (111) of the housing body (110) may accommodate at least one inner conductor element (240) electrically connected with the electrical cable (2), wherein
the inner conductor element (240) is surrounded by an electromagnetic shielding (180) extending substantially along a longitudinal extension of the inner conductor element (240).

3. Angled electrical connector according to claim 1 or 2, wherein the electromagnetic shielding (180) of the electrical connector (1) may be electrically connected with a shielding conductor (280) of the electrical cable (2), wherein the electromagnetic shielding (180) surrounds the electrical connection of the electrical cable (2) and the inner conductor element (240).

4. Angled electrical connector according to one of claims 1 to 3, wherein an angled tip portion (200) of the cable (2) may be accommodated in an assembled housing (100) of the electrical connector (1), wherein
the electromagnetic shielding (180) in an angled section (201) of the electrical cable (2) within the housing (100) is divided into two parts (182, 184).

5. Angled electrical connector according to one of claims 1 to 3, wherein an angled inner conductor element may be accommodated in an assembled housing (100) of the electrical connector (1), wherein
the electromagnetic shielding (180) in an angled section of the inner conductor element within the housing (100) is divided into two parts, and
the electrical cable (2) extends in a straight line away from a mounting portion at the inner conductor element.

6. Angled electrical connector according to one of claims 1 to 5, wherein within the assembled housing (100)
the electromagnetic shielding (180) for the electrical cable (2) with the attached inner conductor element (240) is divided only in an angled section (181) of the electromagnetic shielding (180) in at least two parts, or
the electromagnetic shielding (180) is divided in at least two parts over the whole extension from its electrical connection with the electrical cable (2) to a section in a middle or near a tip end of the inner conductor element (240).

7. Angled electrical connector according to one of claims 1 to 6, wherein between the electromagnetic shielding (180) and the electrical cable (2) and/or the inner conductor element (240) a seat (170), preferably made of plastic, is arranged, which guides the electrical cable (2) and/or the inner conductor element (240) within the electromagnetic shielding (180).

8. Angled electrical connector according to claim 7, wherein the seat (170) is divided in into two parts (172, 174) and a parting plane of the two part seat (170; 172, 174) lies either within or not within a parting plane of the two part electromagnetic shielding (180; 182, 184).

9. Angled electrical connector according to one of claims 1 to 8, wherein the two parts (182, 184) of the electromagnetic shielding (180) may be crimped together, and preferably each of the two parts (172, 174) of the seat (170) are located in a part (182, 184) of the electromagnetic shielding (180).

10. Angled electrical connector according to one of claims 1 to 9, wherein
the housing cover (140) comprises an opening (143) for insertion of a packaged electrical cable 2 with its attached inner conductor element (240) and its attached electromagnetic shielding (180), and
the housing body (110) comprises an opening (113) for receiving a tip portion of the assembled electrical cable 2, wherein
a plane of the opening (143) of the housing cover (140) is inclined with respect to a plane of the opening (113) of the housing body (110).

11. Angled electrical connector according to one of claims 1 to 10, wherein the housing cover (140) is partially insertable into the housing body (100).

12. Angled electrical connector according to one of claims 1 to 11, wherein
an insulator sleeve (128) surrounds in the manner of a jacket a channel extending from the plug-in area (111) to a cable area (112) of the housing body (110), into which channel the inner conductor element (240) of the electrical cable (2) may be introduced from the cable area (112), and
a support sleeve (130) which surrounds the insulator sleeve (128) in the manner of a jacket is connected mechanically with the insulator sleeve (128) in the plug-in area (111) and is connected mechanically with the housing body (110) at the cable area (112),
wherein a cavity (135) between the insulator sleeve (128) and the support sleeve (130) is formed, into which a tip portion of the electromagnetic shielding (180) may be introduced.

13. Angled electrical connector according to one of claims 1 to 12 further comprising
a shield (124) with a second spring contact (126), sitting on the support sleeve (130), which is designed to contact a shield element of the connector receptacle when the electrical connector (1) is electrically connected with the connector receptacle, and
an opening (131) in the support sleeve (130), wherein the opening (131) is designed that a first spring contact (125) provided at the shield (124) or the electromagnetic shielding (180) projects through the opening (131) and electrically contacts the electromagnetic shielding (180) or the shield (124), respectively.

14. Electrical connector arrangement including a high-current angled electrical connector (1) according to one of claims 1 to 13 and a connector receptacle for the high-current angled electrical connector (1).
